# DEMANDE DE BREVET EUROPEEN

(11) **EP 0 860 110 A1**
(43) Date de publication de la demande: **26.08.1998**
(21) Numéro de dépôt: 98430003.8
(22) Date de dépôt: 22.01.1998
(51) Int. Cl.: A01K 1/00, A01K 1/03, A01K 1/02

(54) **Abri provisoire pour animaux notamment**

(30) Priorité: 23.01.1997 FR 9700911
(71) Demandeur: de Lard de Regoullière, Philippe Claude Marie, 13480 Cabries (FR)
(72) Inventeur: de Lard de Regoullière, Philippe Claude Marie, 13480 Cabries (FR)
(74) Mandataire: Somnier, Jean-Louis

(57) **Abrégé**

Le secteur technique de l'invention est le domaine de la fabrication des boxes ou cages pour animaux.

La présente invention a pour objet un abri provisoire susceptible d'être utilisé pour abriter des animaux domestiques tels que des chevaux ou des chiens notamment, et constituant un box ou une cage pour un animal.

Ledit abri provisoire selon l'invention est de forme sensiblement tronconique ou évasée, et est ouvert sur au moins une face, de manière à ce que deux abris provisoires identiques puissent être emboîtés en grande partie l'un dans l'autre.

## Description

La présente invention a pour objet un abri provisoire susceptible d'être utilisé pour abriter des animaux domestiques de grande taille tels que des chevaux ou des chiens notamment, et constituant un box ou une cage pour un animal.

Le secteur technique de l'invention est le domaine de la fabrication des boxes ou cages pour animaux.

L'objectif poursuivi par l'invention est de procurer un abri provisoire facilement déplaçable.

Lors de l'organisation de compétitions équestres notamment, il est nécessaire d'aménager des abris provisoires individuels pour les chevaux ; dans de telles occasions, on fait généralement appel à des sociétés de location de boxes constitués à partir de panneaux essentiellement plans, qui sont assemblés les uns aux autres sur le site d'utilisation et de construction de l'abri temporaire, par assemblage de plusieurs panneaux les uns aux autres ; le brevet FR 2.712.772 (HUE Jean-Marie) décrit un élément à disposer verticalement et à assembler avec d'autres pour constituer au moins un box après assemblage d'au moins deux panneaux latéraux de séparation avec un panneau de façade flanqué d'une porte.

Les panneaux habituellement utilisés pour la construction sur site de boxes pour chevaux, qui sont de grande dimension et de masse élevée généralement dues à une structure métallique suffisante pour résister aux efforts et aux chocs lors de leur utilisation, nécessitent généralement l'emploi de dispositifs de levage importants pour leur acheminement d'une remorque d'un camion de livraison des panneaux, jusqu'au site d'érection de l'abri provisoire, et nécessitent souvent l'utilisation d'une grue pour leur mise en place et leur assemblage ; il en résulte que l'assemblage des boxes à partir de panneaux est une opération coûteuse du fait de l'utilisation nécessaire de matériel de manutention, et également du fait du temps important d'assemblage des panneaux pour constituer un box ; les opérations de déplacement des panneaux rentrant dans la constitution de chaque box, du camion jusqu'au site d'implantation des boxes, et du montage des boxes en eux-mêmes et de l'assemblage des différents boxes entre eux, sont en général rendues difficiles par le fait que le terrain naturel sur lequel sont érigés les boxes, est d'une part non plan et d'autre part souvent boueux.

Un objectif de l'invention est donc de procurer un box très facile à monter et très facile à transporter et à stocker.

Conformément à l'invention, un abri provisoire, en particulier un box ou une cage pour animal, particulièrement pour un cheval, est de forme sensiblement tronconique ou évasée, et est ouvert sur au moins deux faces : une face inférieure et une face latérale dite face avant, qui constitue de préférence la grande base de la forme tronconique ; de cette manière, deux abris provisoires identiques peuvent être imbriqués et/ou encastrés et/ou emboîtés en grande partie l'un dans l'autre, en occupant un volume peu supérieur au volume occupé par un seul abri provisoire, par exemple en occupant un volume (et/ou une longueur) inférieur ou égal à 120 % du volume (respectivement de la longueur) occupé par un seul abri, pour faciliter le stockage et le transport simultané de plusieurs abris.

Selon des modes préférentiels de réalisation de l'invention :
- ledit abri comporte un ou plusieurs moyens tels qu'un ou plusieurs patins ou roues, de glissement à frottement faible et/ou de roulement sur le sol, pour faciliter le déplacement permettant l'encastrement de deux abris l'un dans l'autre, et pour faciliter le déplacement de l'abri par roulement ou glissement sur une remorque de transport et/ou sur le terrain naturel ;
- l'ossature ou la structure mécanique dudit abri est monobloc, c'est-à-dire en une seule pièce, rigide, et de préférence essentiellement métallique, ce qui permet d'obtenir un abri dont les faces ou parois sont de faible épaisseur, et ce qui permet par conséquent d'emboîter deux abris identiques l'un dans l'autre en laissant un faible volume mort ou distance d'encastrement perdue, et ce qui permet par conséquent d'augmenter la compacité d'un ensemble de plusieurs abris encastrés l'un dans l'autre, l'ossature monobloc et rigide permettant en outre d'éliminer ou de diminuer fortement le temps nécessaire pour la mise en place d'un ou plusieurs boxes sur un terrain, et permettant également d'éliminer ou de diminuer fortement le temps d'assemblage de plusieurs abris entre eux ;
- chaque paroi ou face latérale (à l'exception de ladite face avant ouverte) dudit abri comporte un cadre métallique, par exemple réalisé à l'aide de tronçons de profilé métallique creux de section carrée ou rectangulaire, qui sont soudés entre eux par leurs extrémités, et comporte un treillis métallique, de préférence à mailles carrées ou rectangulaires, qui est fixé audit cadre, ce qui permet d'obtenir une structure rigide, robuste, à un faible coût et de masse relativement faible ;
- la surface de chacune des mailles du treillis métallique est comprise entre 10⁻⁴ et 5.10⁻² m², de préférence comprise entre 0,25.10⁻² et 2,5.10⁻² m², par exemple voisine de 10⁻² m² pour optimiser sa résistance aux chocs ;
- l'abri selon l'invention est sensiblement symétrique par rapport à un plan vertical, longitudinal médian, comporte deux faces ou parois latérales, sensiblement verticales et symétriques par rapport audit plan ; l'abri comporte une face ou paroi de toit inclinée par rapport à l'horizontale, de préférence à un ou deux versants ; l'abri comporte une face avant ouverte constituant une grande base de la forme tronconique de la structure de l'abri, et comporte une face arrière fermée par un treillis, constituant la petite base de la forme tronconique de la structure ;
- une face arrière ou latérale comporte au moins une porte ou ventail, montée pivotante sur un encadrement lui-même monté pivotant (selon un axe vertical) sur l'ossature de ladite face arrière ou d'une face latérale de l'abri ; de préférence, la somme de la largeur de ladite face arrière (ou latérale) de l'abri et de la largeur dudit encadrement pivotant est sensiblement égale (à 10 % près par exemple) à la largeur de la face avant de l'abri, ce qui permet de disposer deux abris bout-à-bout et de les assembler simplement par liaisonnement de leur ossature et ce qui permet à ladite porte ou ventail de constituer un moyen d'accès (et de fermeture) à un des deux abris ;
- l'angle d'inclinaison de la face supérieure ou de toit de l'abri par rapport à l'horizontale, ainsi que la moitié de l'angle d'ouverture du cône de la forme tronconique (ce qui correspond à l'angle d'inclinaison des faces latérales par rapport à un plan vertical médian et de symétrie), sont compris entre 3° et 30°, de préférence compris entre 5° et 15°, par exemple voisins de 10°, et l'épaisseur du cadre des faces latérales et supérieures est inférieure ou égale à 10 centimètres, de préférence voisine de 3 à 7 centimètres, pour obtenir une épaisseur du volume mort délimité par deux abris encastrés l'un dans l'autre, qui est inférieure à 1 mètre, de préférence comprise entre 5 et 50 centimètres ;
- l'abri comporte une bâche en matière plastique de couverture de la face supérieure de l'abri et d'une partie supérieure des faces latérales de celui-ci, et comporte de préférence un mince panneau intérieur fixé en partie inférieure de chacune des deux parois ou faces latérales (ainsi que de la paroi de fond (arrière)) de l'abri, de préférence constitué par un panneau de matière plastique, ce qui permet d'obtenir des parois supérieures et latérales opaques ou fermées sans grever la masse ou le coût de l'abri et permettant d'améliorer le confort de l'animal.

L'invention procure des abris suffisamment rigides et légers pour être manoeuvrés par simple roulage ou glissement sur le sol, par exemple par une seule personne, ou bien par traction à l'aide d'un treuil motorisé ou non.

L'invention permet de procurer des boxes facilement déplaçables qui peuvent être stockés en occupant un encombrement réduit, qui peuvent être transportés en grand nombre sur une remorque d'un camion et qui peuvent en outre être utilisés en dehors de l'organisation des compétitions équestres ou canines pour d'autres utilisations, notamment pour constituer des abris de jardin, et pour constituer des abris mobiles temporaires aptes à protéger tout matériel des intempéries, qui peuvent ainsi être loués en dehors des saisons correspondant aux compétitions équestres.

Les nombreux avantages procurés par l'invention seront mieux compris au travers de la description suivante qui se réfère aux dessins annexés, qui illustrent sans aucun caractère limitatif des modes préférentiels de réalisation de l'abri provisoire selon l'invention.

Sur les différentes figures annexées, des éléments identiques ou similaires sont repérés par des nombres identiques ou bien par des nombres dont la différence est égale à 100 ou à un multiple de 100.

La figure 1 illustre en vue en perspective schématique un premier mode de réalisation d'un abri temporaire conforme à l'invention, dont la face supérieure de toit est à une seule pente, et qui est équipé de roulettes pour faciliter son déplacement.

La figure 2 illustre en vue en perspective schématique un deuxième mode de réalisation d'un abri provisoire selon l'invention qui comporte une face supérieure de toit à deux pentes, et qui comporte en outre des patins ou traîneaux pour faciliter son déplacement.

La figure 3 illustre schématiquement en vue latérale deux boxes conformes à la figure 2, encastrés l'un dans l'autre, et est une vue selon III-III de la figure 2.

La figure 4 illustre en vue latérale schématique six boxes repérés 101, 201, 301, 401, 501, 601 encastrés ou imbriqués les uns dans les autres et disposés sur le plateau 24 d'une remorque d'un camion 23 de transport des boxes.

La figure 5 illustre en vue en plan (telle que la vue selon V-V de la figure 3) schématique deux boxes ou abris provisoires conformes à l'invention, imbriqués l'un dans l'autre.

La figure 6 illustre un mode préférentiel de réalisation d'un box dont une paroi arrière ou latérale est équipée d'un cadre pivotant à l'intérieur duquel sont prévus deux ventaux également pivotants, montés sur des gonds ou des charnières d'axe vertical.

La figure 7 illustre en vue en plan schématique deux boxes disposés bout à bout dans leur position d'utilisation et dans lesquels les ventaux pivotants d'un box servent à fermer le box adjacent.

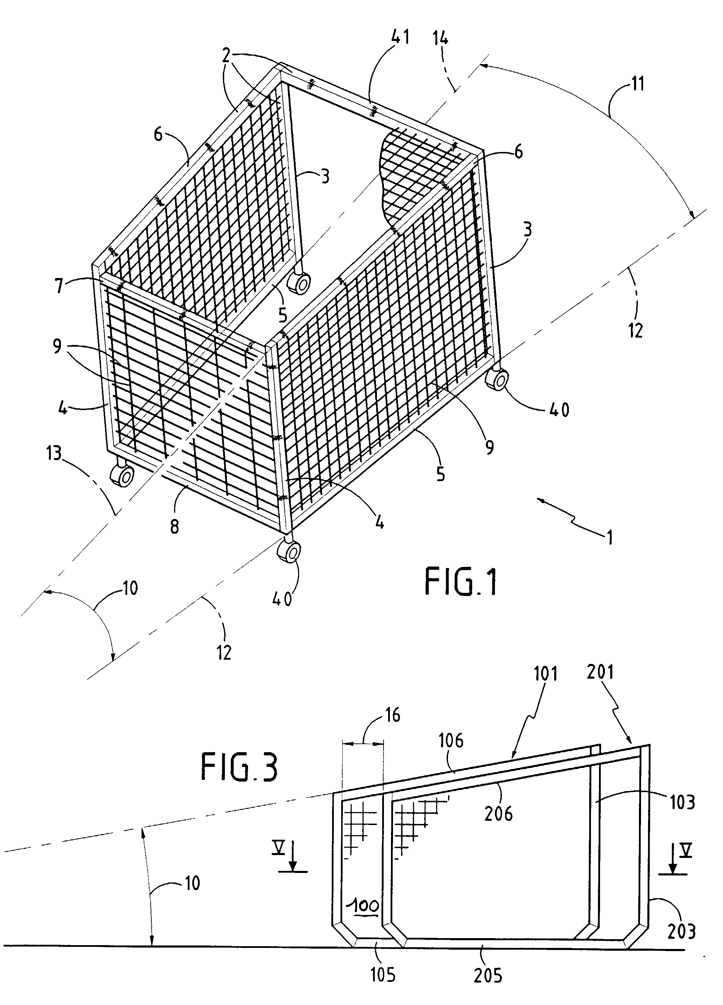

Par référence aux figures 1 à 3 particulièrement, chacun des boxes ou abris temporaires 1, 101, 201, comporte une structure 2 monobloc rigide essentiellement constituée de tronçons 3, 4, 5, 6, 7, 8, assemblés entre eux, par exemple par soudure, pour constituer l'ossature rigide de l'abri.

L'abri comporte quatre faces (fermées) ou parois grillagées, à savoir deux faces latérales de préférence sensiblement verticales, une face supérieure ou de toit qui est inclinée d'un angle 10 par rapport à l'horizontale 12, 14 et une face arrière constituant la petite base de la forme tronconique de la structure.

La grande base de la forme tronconique de la structure est constituée par une face avant ouverte délimitée par deux montants avant verticaux 3, 103, 203, et par une traverse supérieure horizontale 41 reliant les deux montants 3.

L'abri est en outre ouvert sur sa partie (ou face) inférieure qui est délimitée par deux traverses latérales inférieures 5 et une traverse arrière inférieure 8, lesquelles traverses inférieures 5, 8 sont horizontales.

Ainsi, les faces latérales sont essentiellement constituées par un cadre métallique constitué de quatre tronçons principaux : un montant avant 3, 103, 203, une traverse inférieure latérale 5, 105, 205, un montant arrière 4 vertical et une traverse latérale supérieure 6, 106, 206, qui s'étend selon l'axe 13 qui est incliné d'un angle 10 par rapport à l'horizontale, lequel angle est par exemple voisin de 10°.

Ces quatre tronçons métalliques forment un cadre auquel est fixé un treillis 15, de préférence constitué de mailles carrées ou rectangulaires, de fils métalliques 9 constituant un treillis soudé ou grille ou paroi à claire-voie.

De la même façon, la face arrière de l'abri est constituée par un cadre carré ou rectangulaire formé des tronçons verticaux 4 et horizontaux 7 et 8 assemblés entre eux (par exemple par soudure) à leurs extrémités et munis d'un treillis de fils métalliques 9 obturant le cadre ; de façon similaire, la face supérieure ou de toit de l'abri de la figure 1 est constituée par le cadre résultant de l'assemblage des traverses 6, 7 et 41 auxquelles est fixé un treillis métallique ; l'abri est dénué de plancher, c'est-à-dire que sa face inférieure délimitée par les tronçons 5 et 8 est ouverte (et dénuée de treillis).

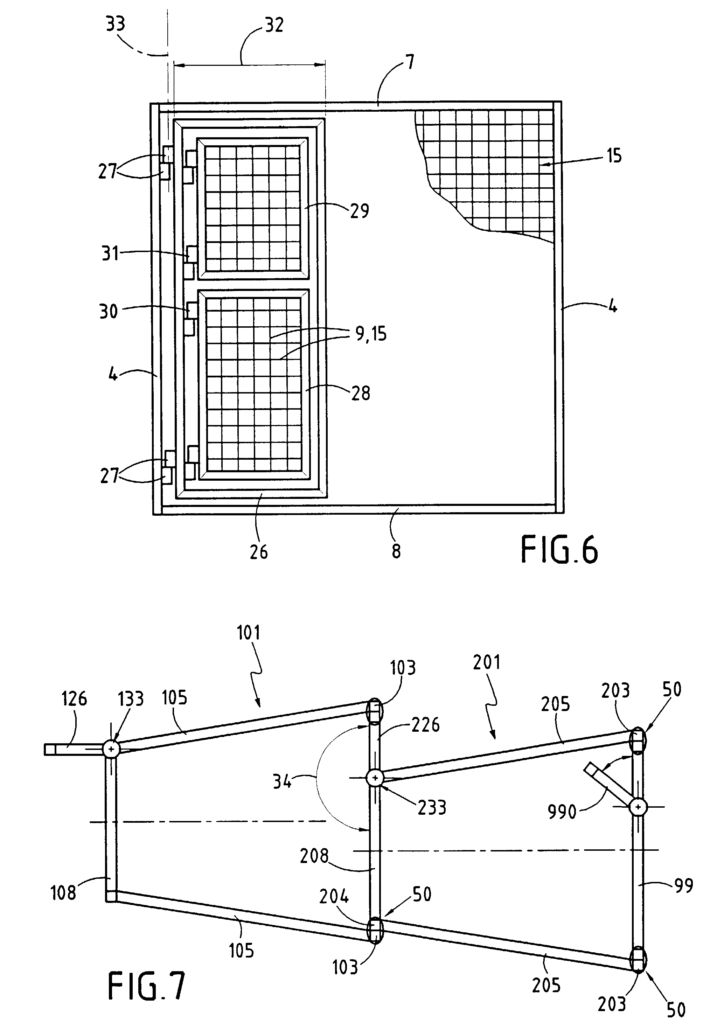

Les traverses latérales inférieures 5 de chacune des parois latérales de l'abri s'étendent selon deux axes horizontaux 12 et 14 qui délimitent un angle 11 correspondant à un angle au sommet de la forme tronconique ou évasée de l'abri, dont la valeur est égale au double de la valeur de l'angle (repéré 19, figure 5) d'inclinaison des faces latérales et des traverses latérales inférieures 105, 205 correspondantes, par rapport à un plan 18 vertical médian et de symétrie de l'abri (dans le cas où les parois latérales sont symétriques par rapport à ce plan).

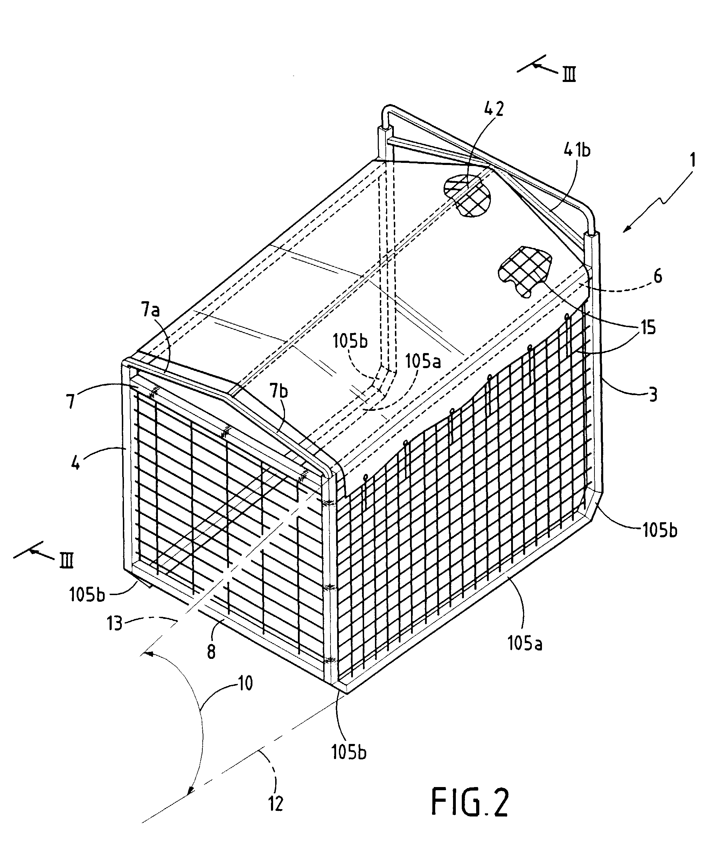

Alors que dans le mode de réalisation illustré figure 1, la face supérieure de toit de la structure comporte une seule pente inclinée de l'angle 10 par rapport à l'horizontale, dans le mode de réalisation illustré figure 2, cette face supérieure comporte deux pentes, de préférence symétriques par rapport à un plan vertical longitudinal médian ; chaque demi-pente ou demi-face supérieure est délimitée par un cadre comportant un tronçon 7b (7a respectivement), la traverse latérale supérieure 6 commune à la face supérieure et à la face latérale, la traverse supérieure avant 41b et une traverse (ou un tronçon) de faîte 42.

On voit également par comparaison entre ces deux figures que l'abri de la figure 1 est équipé de quatre roulettes 40 facilitant son déplacement par roulement sur le sol, alors que l'abri représenté figure 2 comporte des genres de patins, par exemple constitués par un tronçon central 105a de la traverse latérale inférieure 105 qui est coudée à chacune de ses extrémités pour former deux tronçons inclinés 105b, l'abri étant ainsi susceptible de glisser sur le sol par contact avec le sol par la partie centrale 105a de sa traverse inférieure latérale.

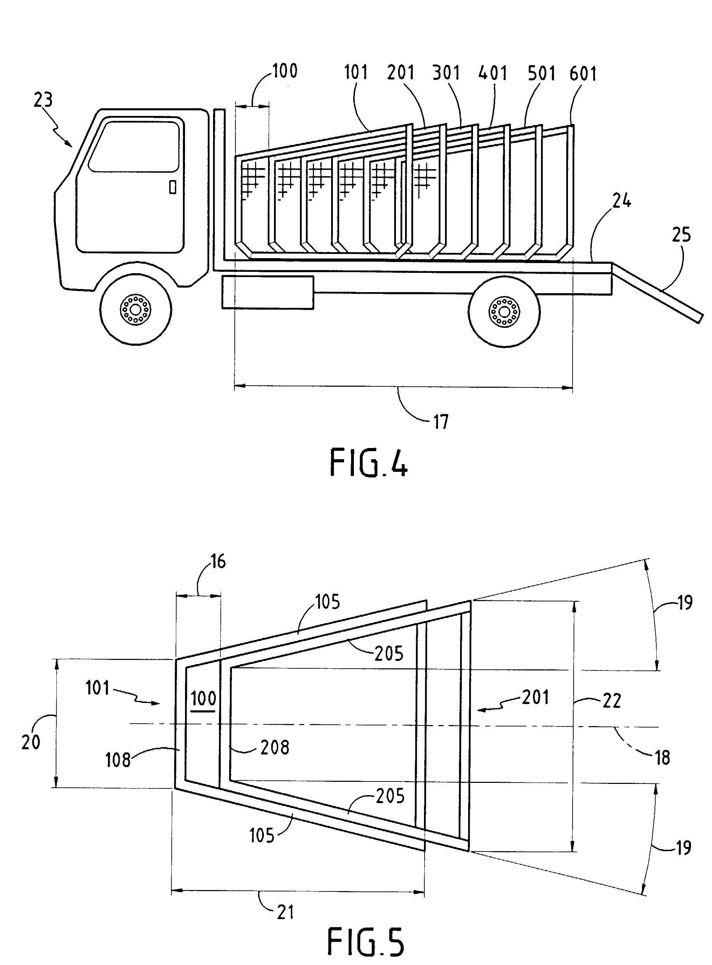

Par référence aux figures 3 et 5, on voit que lorsque deux abris identiques conformes à l'invention sont encastrés l'un dans l'autre, il reste un volume mort 100 entre les deux abris, dont l'épaisseur correspondant à une longueur 16 dépend du choix de l'angle 10 d'inclinaison de la paroi supérieure, ainsi que de l'angle 19 d'inclinaison des parois latérales, et de l'épaisseur des parois ou faces de la structure de l'abri ; afin de minimiser cette distance perdue 16 correspondant à l'espace mort 100, les tronçons qui définissent l'épaisseur de chacune des parois sont d'une épaisseur la plus faible possible, et les angles d'inclinaison 10 et 19 sont choisis avec une valeur suffisamment élevée pour diminuer ladite longueur 16.

A titre d'exemple préférentiel, lorsque les angles 10 et 19 sont voisins de 10° et l'épaisseur des profilés métalliques ou des cadres de la structure est voisine de 5 centimètres, on obtient une distance 16 qui est de l'ordre de 25 centimètres environ ; ainsi, lorsque six abris sont imbriqués les uns dans les autres comme illustré figure 4, sur le plateau 24 de la remorque d'un camion 23, la longueur 17 occupée par l'ensemble des six abris (101, 201, 301, 401, 501, 601) imbriqués les uns dans les autres est sensiblement égale à la longueur 21 de chaque box, par exemple voisine de 3 mètres, augmentée de cinq fois ladite distance 16, soit de l'ordre de 1,25 mètre, ce qui représente un encombrement global mesuré selon l'axe longitudinal des boxes et de la remorque, de 4,25 mètres.

A titre d'exemple, la largeur 20 de la face arrière du box qui correspond à la longueur des traverses inférieures arrière 108, 208, est de l'ordre de 1,50 mètre et la largeur 22 de la face avant qui correspond à la longueur de la traverse supérieure 41 (figure 1) est de l'ordre de 2,50 mètres.

Par référence aux figures 6 et 7, le cadre constitué des tronçons 4, 7 et 8 et formant l'ossature de la paroi arrière d'un abri, peut être équipé d'un cadre ou encadrement 26, 126, 226 monté pivotant par rapport au cadre 4, 7, 8, selon un axe vertical 33, 133, 233, grâce à des gonds 27 ou charnières, ce qui permet de faire pivoter selon la flèche 34 le cadre 26, 126, 226, par rapport à la structure de l'abri 101, 201 ; le cadre pivotant 26 sert d'encadrement à deux ventaux 28 et 29 superposés, eux-mêmes montés pivotants à l'intérieur du cadre 26 grâce à des gonds 30, 31 d'axe vertical.

Comme illustré figures 6 et 7, lorsque deux boxes 101 et 201 sont juxtaposés bout à bout de sorte qu'une de leurs parois latérales 105, 205, soit dans le prolongement d'une autre, le cadre pivotant 226 du box 201, qui est pivotant selon l'axe 233 vertical et dont la largeur 32 est choisie comme indiqué ci-avant, peut être fixé temporairement par tout moyen connu, tel que par exemple une sangle 50, au montant 103 du box 101 adjacent, et les ventaux (tels 28 et 29 de la figure 6) du cadre 226 peuvent (dans cette configuration) permettre ou interdire l'accès à l'intérieur du box 101 ; dans cette configuration, le montant arrière 204 du box 201 peut également être relié par une sangle 50 au montant avant 103 du box 101 ; pour fermer la face avant du box 201 figure 6, on utilise un élément plan séparé 99 de paroi, de structure analogue à celle des parois de l'abri ; cet élément 99 est similaire au cadre représenté figure 6 et comporte une partie 990 pivotante selon un axe vertical pour autoriser ou permettre l'accès à l'intérieur du box 201 ; bien entendu lorsqu'on utilise les abris de l'invention de manière séparée, notamment lors de la location d'un seul abri, il faut prévoir un élément séparé 99 pour chaque abri dont on désire fermer la face avant.

## Revendications

1. Abri pour animal tel qu'un cheval, qui est de forme tronconique ou évasée, qui est ouvert sur sa face inférieure, caractérisé en ce qu'il comporte une face avant ouverte et en ce qu'il comporte au moins un moyen de glissement à frottement faible ou de roulement sur le sol.

2. Abri suivant la revendication 1, qui comporte un(e) ou plusieurs patin(s) ou roue(s).

3. Abri suivant l'une quelconque des revendications 1 ou 2, dont l'ossature ou la structure mécanique est monobloc, c'est-à-dire en une seule pièce, et rigide.

4. Abri suivant l'une quelconque des revendications 1 à 3, dans lequel une face arrière ou latérale comporte au moins une porte (28, 29) ou ventail, montée pivotante sur un encadrement (26) lui-même monté pivotant selon un axe vertical (33) sur l'ossature de ladite face arrière ou latérale de l'abri.

5. Abri suivant la revendication 4, dans lequel la somme de la largeur (20) de ladite face arrière de l'abri et de la largeur (32) dudit encadrement pivotant est sensiblement égale à la largeur (22) de la face avant de l'abri.

6. Abri suivant l'une quelconque des revendications 1 à 5, dans lequel l'angle (10) d'inclinaison de la face supérieure ou de toit de l'abri par rapport à l'horizontale est compris entre 3° et 30°, de préférence compris entre 5° et 15°.

7. Abri selon l'une quelconque des revendications 1 à 6, dans lequel la moitié de l'angle (11) d'ouverture du cône de la forme tronconique, ou bien l'angle (19) d'inclinaison des faces latérales par rapport à un plan (18) vertical médian, est compris entre 3° et 30°, de préférence compris entre 5° et 15°.

8. Abri suivant l'une quelconque des revendications 1 à 7, dans lequel chaque paroi ou face latérale comporte un cadre (3, 4, 5, 6) métallique, et comporte un treillis (9, 15) métallique à mailles de préférence carrées ou rectangulaires, qui est fixé audit cadre, et dans lequel l'épaisseur du cadre des faces latérales et supérieures est inférieure ou égale à 10 centimètres, de préférence voisine de 3 à 7 centimètres.

9. Abri suivant l'une quelconque des revendications 1 à 8, qui comporte une bâche en matière plastique de couverture de la face supérieure de l'abri et d'une partie supérieure des faces latérales de celui-ci, et qui comporte de préférence un mince panneau intérieur fixé en partie inférieure de chacune des parois ou faces latérales de l'abri, de préférence constitué par un panneau de matière plastique.

10. Abri suivant l'une quelconque des revendications 1 à 9, qui est sensiblement symétrique par rapport à un plan (18) vertical, longitudinal médian, qui comporte deux faces ou parois latérales, sensiblement verticales et symétriques par rapport audit plan (18), qui comporte une face ou paroi de toit inclinée par rapport à l'horizontale, qui comporte une face avant ouverte constituant une grande base de la forme tronconique de la structure de l'abri, et qui comporte une face arrière fermée, constituant la petite base de la forme tronconique de la structure.
